# DEMANDE DE BREVET EUROPEEN

(11) **EP 1 767 510 A2**
(43) Date de publication de la demande: **28.03.2007**
(21) Numéro de dépôt: 06121141.3
(22) Date de dépôt: 22.09.2006
(51) Int. Cl.: C05F 3/00, A01C 3/00, C05F 17/00

(54) **Procédé de traitement de déjections animales comprenant une étape de traitement micro-aérobie en présence d'ammoniaque**

(30) Priorité: 22.09.2005 FR 0509721
(71) Demandeur: Bonvallot, Jean-Francois, 89400 Cheny (FR); Ard, Isabelle, 89400 Cheny (FR)
(72) Inventeur: Bonvallot, Jean-Francois, 89400 Cheny (FR); Ard, Isabelle, 89400 Cheny (FR)
(74) Mandataire: Hennion, Jean-Claude

(57) **Abrégé**

La présente invention concerne un procédé de traitement de déjections animales comprenant une étape de traitement micro-aérobie au cours de laquelle les matières végétales, présentes dans les déjections à traiter ou ajoutées à ces dernières, sont imprégnées et dégradées par l'ammoniac dans une atmosphère confinée.

## Description

La présente invention se rapporte, de manière générale, à un procédé de traitement de déjections animales, notamment lisiers de porcs. Plus particulièrement, l'invention concerne un procédé de traitement de déjections animales comprenant une étape de traitement micro-aérobie au cours de laquelle les matières végétales présentes dans les déjections à traiter ou ajoutées à ces dernières sont imprégnées et dégradées par l'ammoniaque dans une atmosphère confinée.

Les déjections animales, notamment le lisier de porcs, ont longtemps été utilisées à l'état brut comme engrais pour les terres agricoles, en raison des éléments nutritifs qu'elles renferment. Actuellement, l'épandage du lisier brut est de plus en plus limité, car impliquant des difficultés liées au transport à distance (volume et poids importants, nécessitant l'utilisation de gros matériel), et surtout en raison de la pollution engendrée, touchant l'ensemble du milieu naturel : air, eau sol.

Divers procédés de traitement de déjections animales ont par conséquent été développés, visant, d'une part, à les concentrer, et, d'autre part, à les rendre moins polluantes.

Parmi ces procédés, certains, de type biologique, comprennent une succession d'étapes nitrification/dénitrification, produisant une boue dont le contenu en azote a été diminué mais qui contient encore beaucoup de phosphates. Tous les procédés existants volatilisent de l'azote sous différentes formes parfois néfastes à l'environnement.

D'autres procédés de traitement comportent une étape de déshydratation thermique de la matière organique. Ces procédés consomment beaucoup d'énergie et nécessitent pour leur mise en oeuvre des installations complexes, et des traitements de condensats.

La présente invention a pour but de pallier les inconvénients susmentionnés. Dans ce but, la présente invention vise à fournir un procédé de traitement de déjections animales simple d'exécution et de coût relativement faible, sans rejet de gaz dans l'air, permettant l'obtention d'un produit de salinité réduite apte à être utilisé comme ingrédient pour support de culture et/ou terreau.

A cet effet l'invention a pour objet un procédé de traitement de déjections animales sans rejet de gaz dans l'air, en vue de réduire leur salinité et d'obtenir un produit final pouvant servir comme ingrédient pour support de culture et/ou terreau, caractérisé en ce qu'il comprend les étapes suivantes :
a. au préalable, ajuster si nécessaire le contenu d'une fraction solide des déjections animales à traiter, obtenue auparavant par centrifugation, filtration ou déshydratation, de manière à obtenir un premier produit ayant une teneur en eau comprise entre 60 et 80% et un rapport C/N supérieur à 10 ;
b. placer ledit premier produit, pendant une durée donnée et à une température donnée, en conditions de micro-aérobiose en limitant les échanges avec l'atmosphère environnante pour obtenir un second produit désodorisé dans lequel les matières végétales présentes ont été imprégnées et dégradées par l'ammoniac provenant de l'urée contenue dans le premier produit.

De manière caractéristique, les conditions de micro-aérobiose de l'étape b sont obtenues par la succession d'étapes suivante :
b1. déposer ledit premier produit dans un conteneur apte à être fermé de manière étanche, de telle sorte que son tassement soit évité ;
b2. couvrir ledit conteneur de manière pratiquement étanche, afin d'éviter l'évaporation de l'ammoniac, de l'eau et autres gaz comme le dioxyde de carbone ou les produits volatils malodorants, et de maintenir l'ammoniac en présence d'eau pour former l'ammoniaque;
b3. maintenir ledit premier produit dans ces conditions pendant une durée suffisante pour permettre aux matières végétales présentes dans le premier produit et éventuellement celles ajoutées à l'étape a d'être dégradées par l'ammoniac pour former avec les composés phénoliques et les polyosides des végétaux, des molécules insolubles complexes ;
b4. maintenir ledit premier produit dans ces conditions pendant une durée suffisante pour permettre la réaction des phosphates contenus dans le premier produit avec le magnésium et l'ammoniaque en vue de la formation de cristaux insolubles de phosphate ammoniacal de magnésium (struvite).

Le procédé selon l'invention comprend une étape de traitement micro-aérobie ayant lieu dans un espace confiné. Ce confinement permet à l'ammoniaque en solution et à l'ammoniac gazeux, formés par hydrolyse de l'urée, d'imprégner les matières végétales, notamment les liaisons cellulose-lignine, présentes dans les déjections animales, et de favoriser leur dégradation par voie biologique. Le produit intermédiaire ainsi obtenu (second produit) est exempt de mauvaises odeurs et constitue la base de départ pour l'étape finale du procédé (étape c), le compostage, qui conduit à la formation d'un produit (compost) de salinité réduite apte à être utilisé comme ingrédient d'un support de culture ou d'un terreau.

Lorsque la fraction solide des déjections animales à traiter obtenue par centrifugation, filtration ou déshydratation, présente un rapport C/N supérieur à 20, le procédé selon l'invention comprend une étape supplémentaire i consistant à ajouter au second produit désodorisé, obtenu à l'issue de l'étape b, des déjections animales liquides brutes, puis de soumettre le mélange ainsi obtenu au traitement micro-aréobie de l'étape b.

Dans un mode de réalisation, l'étape c de compostage consiste à maintenir le confinement dudit second produit dans les mêmes conditions de micro-aérobiose de l'étape b pendant une durée donnée, comprise de préférence entre 4 et 8 semaines.

Dans un autre mode de réalisation, l'étape c de compostage consiste en l'incorporation de terre par étapes successives, aboutissant en environ 20 jours à un support de culture utilisable directement.

L'invention va maintenant être décrite en détail.

Le procédé selon l'invention décrit la manière d'obtenir rapidement un support de culture peu salé, sans odeurs nauséabondes, à partir de déjections animales, en particulier du lisier de porcs. Les lisiers de porcs issus d'élevages intensifs présentent des caractéristiques physico-chimiques variant avec leur densité. Pour un lisier brut à 15°C et une densité comprise entre 1,006 à 1,046 g/cm³, les différents paramètres physico-chimiques s'étalent généralement, en France, sur les domaines suivants:
- teneur en matières sèches : 10 à 93 g/kg (1 à 9,3% en poids) ;
- teneur en azote total : 2 à 7 g/kg (0,2 à 0,7% en poids) ;
- teneur en P₂O₅ : 0,7 à 7,5 g/kg ;
- teneur en K₂O : 1,2 à 4,5 g/kg ;
- teneur en NH₄⁺: 1,5 à 3,9 g/kg.

Le procédé de transformation s'applique à la phase solide d'un lisier filtré, centrifugé ou déshydraté ; cette phase est issue d'une séparation mécanique, obtenue par filtration, centrifugation ou déshydratation du lisier, aboutissant à une partie solide et une partie liquide.

La séparation mécanique des phases liquides et solides des lisiers de porcs est rendue nécessaire par l'application d'une réglementation. La phase solide est récupérée en sortie du système de séparation mécanique (centrifugation ou filtration) ou est obtenue par déshydratation. Cette phase solide présente généralement les caractéristiques suivantes, dépendant de l'élevage lui-même, de l'âge et de la destination des porcs y évoluant (maternité, engraissement, etc.), et de leur alimentation :
- matières sèches : 25 à 35 % en poids du lisier brut ;
- matières organiques : 10 à 25 % en poids du lisier brut (ou 65 à 90% en poids de la matière s)
- teneur en azote total : 15 à 25 g/kg de matière sèche ;
- teneur en azote ammoniacal : 3,5 à 8 g/kg de matière sèche ;
- rapport carbone/azote (C/N): 5 à 30 ;
- pH : 7,5 à 9,5 ;
- conductivité électrique : 5 000 à 6 000 microSiemens/cm (µS/cm) ;
- densité : 0,5 à 0,6 g/cm³.

La partie solide du lisier filtré ou centrifugé présente une teneur forte en sels, traduite par une conductivité électrique très élevée. Ainsi l'utilisation de ce produit comme base de support de culture est impossible d'un point de vue réglementaire d'une part et surtout du point de vue agronomique. Rares sont en effet les plantes acceptant une telle salinité, et la charte professionnelle française fixe pour limite une conductivité de 2 000 µS/cm pour les supports de culture.

Les compostages traditionnels en mélange avec d'autres déchets et aération forcée ou non, ne modifient pas ou augmentent par oxydation, la conductivité électrique du produit final qui devient incompatible avec le développement de la majorité des plantes. Le procédé selon l'invention permet d'obtenir par voie biologique rapide et peu onéreuse un produit présentant une conductivité inférieure à 2 000 µS/cm, de préférence inférieure à 1 500 µS/cm le rendant apte à être incorporé ultérieurement dans la fabrication d'un terreau ou d'un autre support de culture.

La première étape (étape a) du procédé de traitement de déjections animales de l'invention consiste en à ajuster, si nécessaire, le contenu de fraction solide précitée, de manière à obtenir un premier produit ayant une teneur en eau comprise entre 60 et 80% et un rapport C/N supérieur à 10. En effet, la transformation de la partie solide du lisier de porc selon le procédé de l'invention se déclenche en fonction du taux des paramètres précités.

Ainsi la siccité de la partie solide du lisier devra présenter une valeur inférieure à 45% soit une teneur en eau supérieure à 55%. Cette même teneur en eau ne devra cependant pas être supérieure à 80% (siccité inférieure à 20%); ce niveau ne peut cependant être atteint que lors de phases exceptionnelles (particularités venant de la santé des porcs) ou de désordre technique au niveau de la séparation de phases solide-liquide. Les systèmes de séparation proposent des performances de séparation suffisantes pour atteindre le niveau requis avec des déjections d'animaux en bonne santé (siccité de la phase solide du lisier comprise entre 20 et 40%), l'optimum étant voisin généralement de 68% (siccité de 32%), avec les lisiers issus d'élevages d'engraissements.

Si le niveau requis pour la teneur en eau n'est pas atteint, il conviendra soit de rajouter de l'eau, ou mieux, du lisier liquide issu de la séparation.

Dans la cas d'une siccité insuffisante (<20%), il conviendra de procéder à une phase de séparation complémentaire destinée à amener le lisier à une siccité conforme à l'application du présent procédé ou à rajouter de la matière sèche, carbonée ou non, comme décrit ci-dessous.

Le rapport carbone sur azote (C/N) est important pour le procédé : il doit être supérieur à 10, l'optimum étant de 12 à 18. Si le filtrat de lisier présente un rapport C/N inférieur à 10, il conviendra d'ajouter de la matière végétale à forte teneur en carbone pour amener le rapport final du mélange matière carbonée /lisier à la valeur prescrite. Cet ajout par mélange soigneux (mélange intégral) permet en outre d'augmenter le taux de matières sèches du mélange tant il semble avantageux d'utiliser de la sciure de bois très fine à fort C/N (sapin, épicéa etc.. au C/N supérieur à 500) pour atteindre le niveau minimum requis pour que la réaction ait lieu. Par ailleurs, le choix de sciure ou de poudre végétale d'une essence végétale particulièrement sensible à l'ammoniac augmente les chances d'obtenir un second produit rapidement sans odeurs et de très bonne qualité pour la confection des supports de culture. De préférence, la sciure ajoutée à ladite fraction solide doit être fine. L'utilisation de sciure grossière et de déchets verts hétéroclites contraint à un tamisage post-opératoire onéreux et du fait même de l'hétérogénéité desdits déchets verts ou écorces, le contrôle du rapport C/N final du mélange lisier/végétal s'avère particulièrement difficile. L'usage de déchets végétaux pour augmenter la valeur du rapport C/N du mélange fraction solide du lisier /végétaux (source de carbone) est donc déconseillé sinon proscrite. L'utilisation d'autres sources de carbone non fossile et naturel se présentant sous forme solide peut être mise en oeuvre sous réserve d'en connaître parfaitement les caractéristiques, en particulier leur résistance à l'ammoniac.

De préférence, les matières végétales utilisées pour ajuster le rapport C/N sont des matières végétales sensibles à l'action de l'ammoniac, comme les graminées (orge, blé en particulier), ou certaines essences forestières communes.

Dans un mode de réalisation, il est nécessaire d'ajouter, lors de l'étape a, un alcalinisant (par exemple de la chaux magnésienne MgO+CaO) destiné à faire volatiliser l'azote sous forme ammoniacale. C'est le cas notamment des déjections de bovins, qui ne contiennent pas d'urée ; dans ce cas particulier, on ne peut avoir une production rapide et naturelle d'ammoniac par hydrolyse de l'urée, puisque ces animaux ne rejettent pas l'azote sous cette forme.

Le magnésium est souvent suffisamment présent dans l'alimentation du porc pour éviter d'en ajouter au cours de l'étape a ; cela peut cependant s'avérer nécessaire, selon les formules de nutrition du cochon.

Par ailleurs, en fonction de l'ajout dans l'alimentation des porcs d'inhibiteurs d'uréase (qui ralentissent considérablement l'hydrolyse de l'urée en empêchant la formation d'ammoniac et donc d'odeurs dans les élevages), il peut s'avérer nécessaire d'ajouter lors de l'étape a de l'enzyme uréasique pour compenser le manque de production naturelle dans les intestins. Cette uréase est ajoutée de préférence sous forme naturelle : soja pulvérulent, très riche en uréase naturelle.

Cet ajustement qualitatif peut être complété par des argiles bentonitiques ou des zéolites pour bloquer les gros cations résiduels (métaux comme Zn²⁺ ou Cu²⁺, ou NH₄⁺ résiduel) et abaisser encore la conductivité du produit. Il est, dans tous les cas, nécessaire de connaître l'alimentation des animaux pour pouvoir compenser les déficits lors de la mise en oeuvre du procédé.

L'étape suivante du procédé (étape b) consiste à placer ledit premier produit, pendant une durée donnée et à une température donnée, en conditions de micro-aérobiose en limitant les échanges avec l'atmosphère environnante pour obtenir un second produit désodorisé dans lequel les matières végétales présentes ont été imprégnées et dégradées par l'ammoniaque provenant de l'urée contenue dans le premier produit.

Les conditions de micro-aérobiose de l'étape b sont obtenues par la succession d'étapes suivante :
b1. déposer ledit premier produit dans un conteneur apte à être fermé de manière étanche, de telle sorte que son tassement soit évité ;
b2. couvrir ledit conteneur de manière pratiquement étanche afin d'éviter l'évaporation de l'ammoniac, des autres gaz et de l'eau;
b3. maintenir ledit premier produit dans ces conditions pendant une durée suffisante pour permettre aux matières végétales présentes dans le premier produit et éventuellement celles ajoutées à l'étape a d'être dégradées par l'ammoniac pour former avec les composés phénoliques des végétaux, des molécules insolubles complexes ;
b4. maintenir ledit premier produit dans ces conditions pendant une durée suffisante pour permettre la réaction des phosphates contenus dans le premier produit avec le magnésium et l'ammoniaque en vue de la formation de cristaux insolubles de phosphate ammoniacal de magnésium (struvite).

### Etape b1

Il s'agit de déposer ledit premier produit dans une benne étanche ou dans un dispositif maçonné. L'épaisseur suivant laquelle peut être déposé la matière à traiter est définie par la capacité de celle-ci à résister au tassement. Il est absolument nécessaire que le produit ne soit pas tassé mais reste fluide pour que la circulation des gaz puisse s'effectuer convenablement à l'intérieur de la masse et de l'espace confiné. La nature physique du lisier filtré permet cette disposition car celui-ci présente une densité comprise entre 0,5 et 0,6 g/cm³ et une forte teneur en débris végétaux non digérés (parties cellulosiques et ligneuses des végétaux résistant aux sucs gastriques). Le tassement du produit a pour effet d'empêcher la circulation des gaz, d'obturer les interstices par du liquide résiduel, et de modifier, sinon ralentir voire stopper le développement de l'action de transformation.

### Etape b2

Elle consiste en à recouvrir ladite benne ou conteneur avec un film plastique ou un couvercle, de manière à ce que la circulation d'air entre le conteneur et l'espace environnant soit limitée au maximum, soit de procéder à une opération de confinement.

Il n'est cependant pas nécessaire d'évacuer l'air présent, ni d'isoler de manière totalement étanche, pour ne pas créer d'anaérobiose stricte (anoxie) qui troublerait le processus biologique de transformation voire le stopperait.

La couverture du lisier ne doit, elle non plus, en aucun cas le tasser mais a pour fonction de confiner l'air et d'empêcher une évaporation qui nuirait au déroulement du processus, ce dernier ayant besoin d'eau.

La recirculation forcée des gaz de confinement à l'intérieur du produit peut constituer une alternative plus rapide au développement du processus naturel.

### Etape b3

Il s'agit de créer les conditions de ce que l'on appelle: la micro-aérobiose, réaction au cours de laquelle a lieu l'attaque chimique et biochimique des particules végétales résiduelles du lisier. Ce n'est pas en elle-même un simple compostage sensu stricto puisqu'il n'y a pas, au départ, de forte montée en température, la réaction étant peu génératrice de montée en température : par contre, plus la température ambiante est élevée, plus la réaction est rapide.

Les conditions de micro-aérobiose favorisent l'hydrolyse de l'urée résiduelle présente sous forme de cristaux dans les fèces des porcs et donc la transformation en ammoniac de la partie organique de l'azote. Grâce au confinement, les matières végétales présentes dans les fèces porcines qui n'ont pas eu le temps d'être digérées (enveloppe des grains de blé et d'orge et soja et pois etc..) sont imprégnées d'ammoniac, altérées puis dégradées. La vitesse de cette hydrolyse dépend de la température. L'essentiel de l'azote est donc transformé en molécules insolubles, en cristaux et en biomasse aérobie facultative.

Environ 45-50% en poids de l'azote est bloqué sous forme insoluble complexe (réaction avec les liaisons cellulose -lignine). Environ 45-50% en poids de l'azote est précipité par la struvite. Il en reste environ 5% d'azote ammoniacal labile, simplement imprégné dans les végétaux et qui sera utilisé comme source d'énergie par les microorganismes lors du compostage. Le produit obtenu en final présente un taux d'azote ionique (NH₄⁺) inférieur à 0,05% de l'azote total et aucun nitrate.

Au cours de l'étape de micro-aérobiose la conductivité du premier produit (partie solide issue de la séparation de phases) baisse jusqu'à une valeur comprise entre 1200 et 1 800 µS/cm suivant la qualité du produit au départ. On a donc divisé par quatre la conductivité initiale. La teneur en ions NH₄⁺ s'est abaissée en dessous de 0,05% en poids de la matière brute. Le second produit ainsi obtenu ne contient plus de nitrates.

Le contenant (benne ou autre contenant, ou système maçonné-alvéole ou silo) et son contenu peuvent être déposés à l'extérieur, en plein soleil ou à l'intérieur de locaux ou de hangars. La vitesse de réaction biologique dépend de la température et sera plus rapide en plein été qu'en hiver.

Ainsi disposé, ledit premier produit doit rester sans aucun bouleversement ni retournement, dans les conditions de micro-aérobiose pendant 12 jours minimum. La température d'été favorise les réactions rapides: température maximum atteinte par le produit : 45°C au soleil; température minimale nocturne : 14°C; moyenne générale pendant douze jours: 22°.

Les douze jours sont suffisants pour obtenir un produit totalement désodorisé en été; en hiver la réaction sera plus lente: il faudra compter environ le doublement du temps de réaction par tranche de perte de 10° C (moyenne générale). Ainsi à une température moyenne de 12°C la réaction se déroule pendant 22 à 23 jours. Par temps d'hiver rigoureux, la réaction sera extrêmement lente, il sera nécessaire de chauffer un peu le produit par tout moyen adapté : dalle chauffante ou autre, éviter cependant les courants d'air générés par un ventilateur aérotherme qui disperseraient l'ammoniac, sauf s'il s'agit d'une recirculation des gaz confinés qui peuvent être chauffés.

A l'issue de ce temps, le contenant : benne, alvéole maçonnée ou autre peut être débâché, le film plastique récupéré pour être réutilisé ultérieurement. Le second produit obtenu ne présente plus aucune odeur d'urine ou de fèces particulièrement déplaisantes dans le lisier frais. Il est facile de contrôler la fin de la réaction en récupérant, soulevant légèrement le couvercle du dispositif de réaction, un peu de produit pour vérifier que toute odeur de lisier ou d'ammoniac a disparu. Le second produit, récupéré à l'issue de la phase de micro-aérobiose, est très léger, il a légèrement "gonflé" par imprégnation des matières végétales (action de l'ammoniac par hydrolyse) est s'avère parfaitement conforme à l'étape c de compostage.

Comme exemple simple et pour une petite quantité de lisier filtré nous citerons le remplissage d'un sac de plastique de contenance environ 70 litres jusqu'au deux tiers le rabattage sans noeud de la partie supérieure du sac puis le dépôt de celui-ci dans une poubelle classique cylindrique et la fermeture de celle-ci par son couvercle. Les conditions de micro-aérobiose sont dans ce cas parfaitement obtenues, elles sont facilement reproductibles pour des ouvrages de forte dimension (benne agricole, ouvrages maçonnés spécialement construits, autres contenants). Pour les contenants plus grands : bennes de 10 à 20 m³, il convient d'assurer le confinement du milieu par la disposition à même la surface du lisier, d'un film plastique léger aux dimensions intérieures de ladite benne puis s'appuyant sur les bords de la benne d'un autre film de plastique de taille supérieure à la benne, débordant de chaque côté, soigneusement disposé et bordé pour empêcher les courants d'air à la surface de la benne. Le choix de la couleur noire pour le film plastique de couverture favorise les augmentations de température du lisier en transformation par "effet de serre" et accélère légèrement la vitesse de transformation. Tout autre système de couverture convient au process, le film plastique reste, à ce jour, cependant le plus abordable financièrement et le plus simple à mettre en oeuvre sur les fermes d'élevage.

Il en sera de même pour les autres contenants susceptibles de recevoir le filtrat de lisier qui devront être couverts et confinés pour :
- limiter l'évaporation de l'eau,
- maintenir des conditions de micro-aérobiose strictes,
- limiter les variations de température tout en augmentant les températures maximales pouvant être atteintes en plein soleil,
- éviter la dispersion trop rapide de l'ammoniac résultant de l'hydrolyse de l'urée résiduelle du lisier et base fondamentale de l'hydrolyse biologique des végétaux.
   On pourra envisager de recirculer les gaz confinés dans la masse du produit par un système de ventilation, rustique ou élaboré, en circuit fermé.

Dans une variante de réalisation, des déjections animales liquides brutes peuvent être ajoutées au second produit désodorisé (étape supplémentaire i), obtenu à l'issue de l'étape b du procédé selon l'invention lorsque la fraction solide à laquelle il est appliqué présente un rapport C/N supérieur à 20. Le mélange ainsi obtenu est ensuite soumis au traitement micro-aréobie de l'étape b.

Le procédé selon l'invention comprend en outre une étape c de compostage dudit second produit (fermentation avec forte montée en température), conduisant à la formation d'un produit final (compost) de salinité réduite apte à être utilisé comme ingrédient d'un support de culture ou d'un terreau.

Dans un mode de réalisation, l'étape c de compostage consiste à maintenir le confinement dudit second produit dans les mêmes conditions de micro-aérobiose de l'étape b pendant une durée donnée, comprise de préférence entre 4 et 8 semaines ; le compostage qui se déclenche alors est absolument sans odeurs. Dans ce cas, le procédé selon l'invention aboutit à un compost de très haute qualité et à la granulométrie fine sans tamisage et sans odeur. Cependant, la teneur en zinc et en cuivre issue parfois de l'alimentation des porcs, donc dans leurs déjections, dans certains élevages, s'oppose souvent l'utilisation d'un tel compost « pur » car les réglementations peuvent limiter les concentrations en métaux divers dans les produits destinés à la culture, normalisé ou non.

Dans un autre mode de réalisation, l'étape c de compostage consiste en l'incorporation de terre par étapes successives, aboutissant en environ 20 jours à un support de culture utilisable directement. La technologie de compostage avec terre présente des avantages de rapidité et donc limite considérablement les surfaces nécessaires au procédé de transformation. Ce type de compostage aboutit en environ 20 jours directement à un support de culture pouvant correspondre à une norme d'application obligatoire ; c'est le cas en France. Dans ce cas, l'ajout d'argiles permet de fixer certains cations en particuliers métalliques et d'abaisser encore la salinité du terreau final (autour de 800 - 1000 µS/cm).

La mise en oeuvre du procédé selon l'invention permet la récupération d'un compost de qualité pouvant être utilisé seul ou en mélange avec d'autres éléments comme base de fabrication des supports de culture du commerce et exporté hors des zones de production intensives de porcs (notamment la Bretagne), conformément à la réglementation, avec une forte valeur ajoutée.

## Revendications

1. Procédé de traitement de déjections animales sans rejet de gaz dans l'air, en vue de réduire leur salinité et d'obtenir un produit final pouvant servir comme ingrédient pour support de culture et/ou terreau, **caractérisé en ce qu'**il comprend les étapes suivantes :
a. au préalable, ajuster si nécessaire le contenu des déjections animales à traiter ou d'une fraction solide de celles-ci obtenue auparavant par centrifugation, filtration ou déshydratation, de manière à obtenir un premier produit ayant une teneur en eau comprise entre 60 et 80% et un rapport C/N supérieur à 10 ;
b. placer ledit premier produit, pendant une durée donnée et à une température donnée, en conditions de micro-aérobiose en limitant les échanges avec l'atmosphère environnante pour obtenir un second produit désodorisé dans lequel les matières végétales présentes ont été imprégnées et dégradées par l'ammoniac provenant de l'urée contenue dans le premier produit.

2. Procédé selon la revendication 1 dans lequel l'ajustement du rapport C/N se fait par ajout de matière végétale sensible à l'ammoniac.

3. Procédé selon l'une des revendications 1 et 2 dans lequel les conditions de micro-aérobiose de l'étape b sont obtenues par la succession d'étapes suivante :
b1. déposer ledit premier produit dans un conteneur apte à être fermé de manière étanche, de telle sorte que son tassement soit évité ;
b2. couvrir ledit conteneur de manière pratiquement étanche afin d'éviter l'évaporation de l'ammoniac, des autres gaz et de l'eau;
b3. maintenir ledit premier produit dans ces conditions pendant une durée suffisante pour permettre aux matières végétales présentes dans le premier produit et éventuellement celles ajoutées à l'étape a d'être dégradées par l'ammoniac pour former avec les composés phénoliques des végétaux, des molécules insolubles complexes ;
b4. maintenir ledit premier produit dans ces conditions pendant une durée suffisante pour permettre la réaction des phosphates contenus dans le premier produit avec le magnésium et l'ammoniaque en vue de la formation de cristaux insolubles de phosphate ammoniacal de magnésium.

4. Procédé selon l'une des revendications 1 à 3 dans lequel la durée de l'étape b est de minimum 12 jours à une température moyenne de 22°C.

5. Procédé selon l'une quelconque des revendications 1 à 4 dans lequel la fraction solide des déjections animales à traiter obtenue par centrifugation, filtration ou déshydratation, ayant un rapport C/N supérieur à 20, ledit procédé comprend une étape supplémentaire i consistant à ajouter au second produit désodorisé obtenu à l'issue de l'étape b des déjections animales liquides brutes, puis de soumettre le mélange ainsi obtenu au traitement micro-aréobie de l'étape b.

6. Procédé selon l'une quelconque des revendications 1 à 5 dans lequel le second produit obtenu à l'issue de l'étape b présente une teneur en ions NH₄⁺ inférieure à 0,05% en poids de la matière brute et pas de nitrates.

7. Procédé selon l'une quelconque des revendications 1 à 6 comprenant en outre une étape c de compostage dudit second produit, conduisant à la formation d'un produit final (compost) de salinité réduite apte à être utilisé comme ingrédient d'un support de culture ou d'un terreau.

8. Procédé selon la revendication 7 dans lequel l'étape c de compostage consiste à maintenir le confinement dudit second produit dans les mêmes conditions de micro-aérobiose de l'étape b pendant une durée donnée, comprise de préférence entre 4 et 8 semaines.

9. Procédé selon la revendication 7 dans lequel l'étape c de compostage consiste en l'incorporation de terre par étapes successives.

10. Procédé selon la revendication 9 dans lequel la durée de l'étape de compostage est d'environ 20 jours.

11. Procédé selon l'une quelconque des revendications 1 à 10 dans lequel le produit final présente une conductivité inférieure à 1500 µS/cm.
